# FASCICULE DE BREVET EUROPEEN

(11) **EP 2 153 593 B1**
(45) Date de publication et mention de la délivrance du brevet: **31.10.2018**
(21) Numéro de dépôt: 08759760.5
(22) Date de dépôt: 20.05.2008
(51) Int. Cl.: H04W 40/22

(54) **PROCÉDÉ DE TRANSMISSION DE PAQUETS DE DONNÉES**
VERFAHREN ZUR ÜBERTRAGUNG VON DATENPAKETEN
METHOD OF TRANSMITTING DATA PACKETS

(30) Priorité: 24.05.2007 FR 0755249
(43) Date de publication de la demande: 17.02.2010
(73) Titulaire: Thomson Licensing, 92130 Issy-les-Moulineaux (FR)
(72) Inventeur: JEANNE, LUDOVIC, F-35200 Rennes (FR); FONTAINE, PATRICK, F-35200 Rennes (FR); GUGUEN, CHARLINE, F-35700 Rennes (FR)
(74) Mandataire: Le Dantec, Claude
(86) Numéro de dépôt international: PCT/EP2008/056143
(87) Numéro de publication internationale: WO 2008/142062

(56) Documents cités:
- EP-A- 1 575 224
- WO-A1-2007/053950
- WO-A1-2007/053954
- US-A1- 2004 001 491
- US-B1- 6 570 866
- US-B1- 6 778 495
- US-B1- 7 006 472

## Description

### 1. Domaine de l'invention.

La présente invention concerne le domaine des télécommunications et plus précisément la transmission de données fiable d'une station de base à des stations distantes reliées à des sous-réseaux.

### 2. Arrière-plan technologique.

Selon l'état de l'art, plusieurs architectures de réseaux sans fil ou filaires sont connues. Certaines d'entre elles sont basées sur une architecture centralisée avec une station de base échangeant des données avec des noeuds de sous-réseaux filaires, chaque sous-réseau étant relié avec la station de base par une station distante via une liaison sans fil ou filaire. La station de base gère la transmission vers des noeuds des sous-réseaux filaires via un mécanisme de routage. L'état de la technique présente l'inconvénient d'être relativement complexe à mettre en oeuvre, notamment lorsque le nombre de noeuds des sous-réseaux est élevé.

En particulier, un document US-B1-7,006,472 divulgue un réseau sans fil supportant plusieurs qualité de service avec une classification relativement complexe à mettre en oeuvre.

Les documents EP-A-1 575 224 et US-B16,778,495 divulguent des transmissions de données relativement difficiles à mettre en oeuvre.

US 6570866 B1 ***décrit un routeur comprenant un circuit primaire configuré pour retrouver l'information de routage concordante la plus longue.***

### 3. Résumé de l'invention.

L'invention a pour but de pallier ces inconvénients de l'art antérieur.

Plus particulièrement, l'invention a pour objectif de simplifier la mise en oeuvre de la transmission de données par au moins une station de base à des noeuds de sous-réseaux, via des stations distantes associées à chaque sous-réseau, en particulier, lorsque le nombre de noeuds est élevé.

L'invention concerne une méthode de transmission de paquets de données par une première station, les paquets étant destinés à un noeud destinataire appartenant à un réseau comprenant une deuxième station, les paquets étant transmis par la première station au noeud destinataire via la deuxième station. Afin de simplifier la mise en oeuvre de la transmission, la méthode comprend :
- une étape de routage d'un ensemble d'au moins un des paquets vers la deuxième station ;
- une étape de classification associée à la deuxième station, la classification attribuant une connexion entre la première station et la deuxième station à l'ensemble d'au moins un des paquets ;
- une étape de transmission de l'ensemble sur la connexion attribuée.

La classification effectuée après un routage est ainsi relativement simple à mettre en oeuvre.

Elle est en particulier plus facile à mettre en oeuvre que selon la technique du document US-B1-7,006,472 cité précédemment, et qui ne prévoit pas de routage vers une deuxième station suivi d'une classification. Elle est également plus simple que dans les documents EP-A-1 575 224 et US-B16,778,495 qui ne divulguent pas de classification associée à la deuxième station.

Selon une caractéristique particulière, le routage met en oeuvre des structures comprenant chacune :
- un identifiant du noeud destinataire ;
- un identifiant de la deuxième station à laquelle le noeud destinataire est associé, l'identifiant de la deuxième station étant associé à une fonction de classification.

Avantageusement, la fonction de classification associée à un identifiant de la deuxième station comprend au moins une fonction de test destinée à tester au moins un paramètre de paquet et attribuer au paquet une connexion.

Selon une caractéristique particulière, les structures comprennent un compteur d'accès qui permet d'éliminer les structures qui ne sont pas utilisées.

Selon une caractéristique avantageuse, la liaison entre la première station et la deuxième station est une liaison sans fil, par exemple du type IEEE 802.16.

WO 2007/053954 A1 décrit une méthode pour utiliser un réseau de communication ayant un noeud relais pour fournir une communication sans-fil avec une station mobile basée sur OFDM.

Avantageusement, la méthode comprend une agrégation de services destinés à au moins deux noeuds destinataires placés sur le réseau, l'agrégation étant associée à la deuxième station

L'agrégation de flux destinés à des noeuds distincts placés derrière une même deuxième station est simplifiée parce que les fonctions de classification ne nécessitent pas l'identification du destinataire mais une simple transmission vers la deuxième station.

### 4. Liste des figures.

L'invention sera mieux comprise, et d'autres particularités et avantages apparaîtront à la lecture de la description qui va suivre, la description faisant référence aux dessins annexés parmi lesquels :
- la figure 1 illustre un exemple d'architecture de réseau de communication avec des éléments mettant en oeuvre l'invention ;
- les figures 2 et 3 présentent schématiquement, respectivement une station de base et une station distante appartenant au réseau de la figure 1, selon un mode particulier de réalisation de l'invention ;
- les figures 4 et 5 présentent un procédé mis en oeuvre dans la station de base de la figure 2, selon un mode particulier de réalisation de l'invention ;
- la figure 6 présente un procédé mis en oeuvre dans la station distante de la figure 3, selon un mode particulier de réalisation de l'invention ;
- la figure 7 illustre un mécanisme de classification avec une division en couches de protocole de communication mis en oeuvre dans la station de base de la figure 2 ;
- la figure 8 illustre un exemple de communication entre différents éléments du réseau de la figure 1 ; et
- la figure 9 présente une fonction de hachage mise en oeuvre dans la station de base de la figure 2.

### 5. Description détaillée de l'invention.

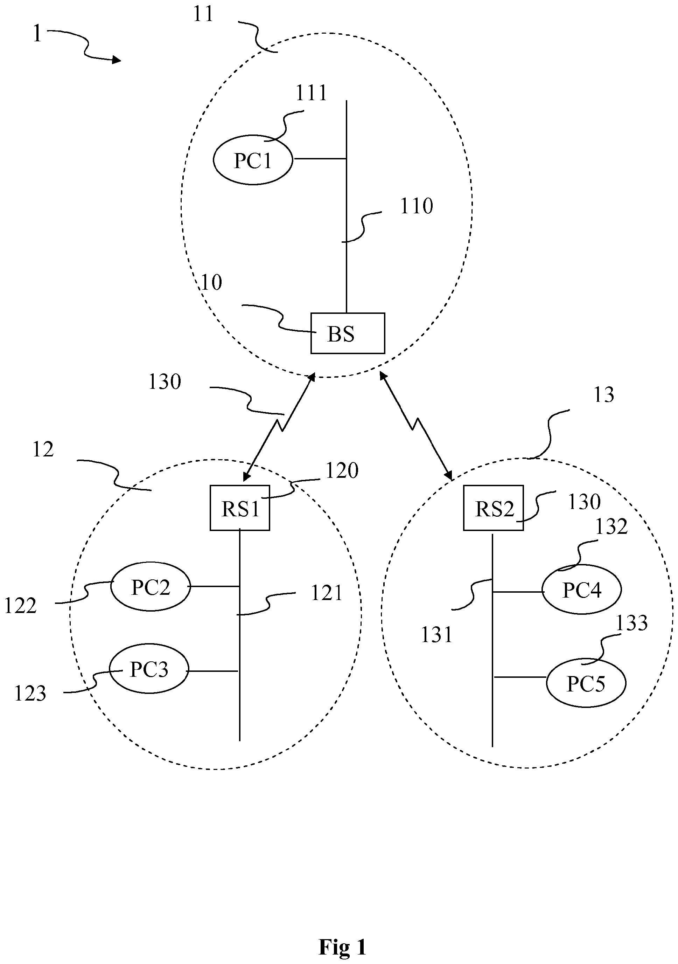

La **figure 1** représente un réseau de communication 1 comprenant trois sous-réseaux 11 à 13 relié par des liaisons sans fil 130 bidirectionnelles. Par exemple, la liaison 130 est une liaison à longue distance et les sous-réseaux 12 et 13 sont des réseaux locaux (dont les noeuds sont à plus courte distance).

Le sous-réseau 11 est un réseau Ethernet filaire (ou IEEE 802.3) comprenant :
- des noeuds (par exemple un noeud PC1 111) aptes à recevoir et/ou transmettre des paquets de données ;
- une station de base (ou BS de l'anglais « Base Station » ou première station) 10 ; et
- une liaison filaire 110 reliant les noeuds et la BS.

Le sous-réseau 12 (respectivement 13) est un réseau Ethernet filaire (ou IEEE 802.3) comprenant :
- des noeuds (par exemple des noeuds PC2 122 et PC3 123 (respectivement PC4 132 et PC5 133) aptes à recevoir et/ou transmettre des paquets de données ;
- une station distante (ou RS de l'anglais « Remote Station » ou, ici, deuxième station ou encore station relais) 120 (respectivement 13) ; et
- une liaison filaire 121 (respectivement 131) reliant les noeuds et la RS.

La BS 10 peut transmettre et/ou recevoir des paquets de données à destination ou en provenance des noeuds des sous-réseaux 12 et 13 via la RS associée en utilisant la liaison sans fil 130 suivant un protocole de communication adapté. Les stations distantes 120 et 130 permettent d'assurer l'interface entre le sous-réseau 111 et le sous-réseau 12 ou 13 auxquelles elles sont associées.

Suivant une variante de l'invention, le réseau comprend plusieurs stations de base. Dans ce cas, les BS utilisent avantageusement des canaux physiques différents (par exemple, canaux fréquentiels ou CDMA (de l'anglais « Code Division Multiple Access » ou « Access multiple par Répartition par code», allocations temporelles (TDMA de l'anglais « Time Division Multiple Access » ou « Access multiple par Répartition dans le temps »).

Selon une autre variante de l'invention, une partie ou tous les sous-réseaux 12 et 13 sont des sous-réseaux sans fil.

Avantageusement, les stations distantes partagent un même canal de fréquences radio sur les liaisons 130, le spectre radio étant une ressource à économiser. Les stations clientes peuvent éventuellement s'écouter mutuellement sur le canal radio. Selon une variante de réalisation, les stations clientes ne peuvent pas mutuellement s'écouter sur le canal radio.

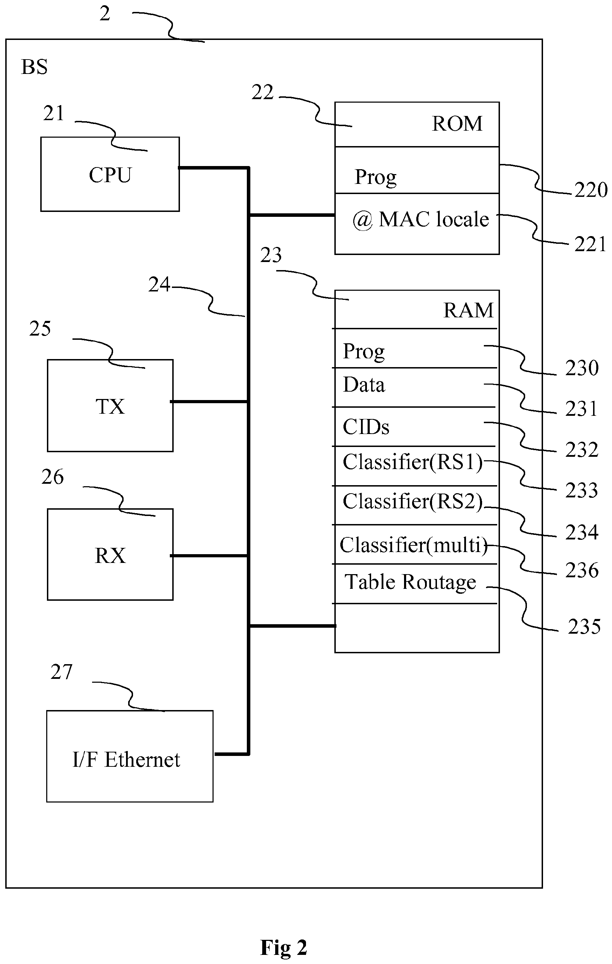

La **figure 2** illustre schématiquement une station de base 2 (ou première station) du réseau 1 correspondant à la station de base 10.

La station de base 2 comprend, reliés entre eux par un bus 24 d'adresses et de données, transportant également un signal d'horloge :
- un microprocesseur 21 (ou CPU) ;
- une mémoire non volatile de type ROM (de l'anglais « Read Only Memory ») 22 ;
- une mémoire vive ou RAM (de l'anglais « Random Access Memory ») 23 ;
- un module 25 de transmission d'un signal sur le lien sans fil ;
- un module 26 de réception d'un signal sur le lien sans fil ; et
- une interface Ethernet 27 reliée au sous-réseau 110.

On observe que le mot « registre » utilisé dans la description des mémoires 22 et 23 désigne dans chacune des mémoires mentionnées, aussi bien une zone de mémoire de faible capacité (quelques données binaires) qu'une zone mémoire de grande capacité (permettant de stocker un programme entier ou tout ou partie des données représentatives d'un service audio/vidéo reçu).

La mémoire ROM 22 comprend notamment :
- un programme « prog » 220 ; et
- une adresse MAC 221 (de l'anglais « Medium Access Control » ou « contrôle d'accès au médium ») propre à la station de base.

Les algorithmes mettant en oeuvre les étapes du procédé propre à l'invention et décrit ci-après sont stockés dans la mémoire ROM 22 associée à la station de base 2 mettant en oeuvre ces étapes. A la mise sous tension, le microprocesseur 21 charge et exécute les instructions de ces algorithmes.

La mémoire vive 23 comprend notamment :
- dans un registre 230, le programme de fonctionnement du microprocesseur 21 chargé à la mise sous tension de la station de base 2 ;
- des données ou des PDU (de l'anglais « Packet Data Unit » ou « unité de données paquets ») ou SDU (de l'anglais « Service Data Unit » ou « unités de données de service ») pouvant contenir un ou plusieurs PDU dans un registre 231 ;
- des identifiants de connexion ou CID (de l'anglais « Connection identifier ») dans un registre 232 ;
- des fonctions de classification (ou « classifiers » en anglais) associées à chacune des stations distantes dans des registres 233 et 234 ;
- une fonction de classification associée à une station distante virtuelle correspondant à une adresse de diffusion multicast ou broadcast dans un registre 236 ; et
- une table de routage dans un registre 235.

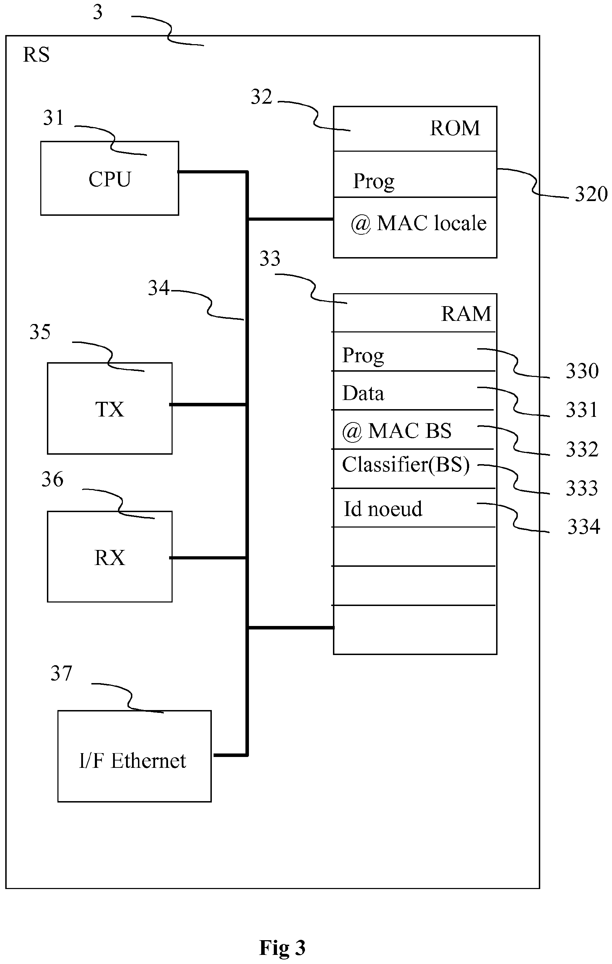

La **figure 3** illustre schématiquement une station distante 3 du réseau 1 correspondant à RS1 ou RS2.

La station distante 3 comprend, reliés entre eux par un bus 34 d'adresses et de données, transportant également un signal d'horloge :
- un microprocesseur 31 (ou CPU) ;
- une mémoire non volatile de type ROM (de l'anglais « Read Only Memory ») 32 ;
- une mémoire vive ou RAM (de l'anglais « Random Access Memory ») 33 ;
- un module 35 de transmission d'un signal sur le lien sans fil ;
- un module 36 de réception d'un signal sur le lien sans fil ; et
- une interface 37 vers un réseau Ethernet.

On observe que le mot « registre » utilisé dans la description des mémoires 32 et 33 désigne dans chacune des mémoires mentionnées, aussi bien une zone de mémoire de faible capacité (quelques données binaires) qu'une zone mémoire de grande capacité (permettant de stocker un programme entier ou tout ou partie des données représentatives d'un service audio/vidéo reçu).

La mémoire ROM 32 comprend notamment :
- un programme « prog » 320 ; et
- une adresse MAC 321 propre à la station distante 3.

Les algorithmes mettant en oeuvre les étapes du procédé propre à l'invention et décrit ci-après sont stockés dans la mémoire ROM 32 associée à la station de base 3 mettant en oeuvre ces étapes. A la mise sous tension, le microprocesseur 31 charge et exécute les instructions de ces algorithmes.

La mémoire vive 33 comprend notamment :
- dans un registre 330, le programme de fonctionnement du microprocesseur 31 chargé à la mise sous tension de la station distante 3 ;
- des données ou des PDU (de l'anglais « Packet Data Unit » ou « unité de données paquets ») ou SDU (de l'anglais « Service Data Unit » ou « unités de données de service ») pouvant contenir un ou plusieurs PDU dans un registre 331 ;
- une adresse MAC 332 propre à la station de base connectée à la station distante 3 dans un registre 332 ;
- une fonction de classification (ou « classifiers ») associées à la station de base dans un registre 333 ; et
- des identifiants des noeuds appartenant au sous réseau associé à la station distante 3 (par exemple du type adresses MAC et/ou adresses IP).

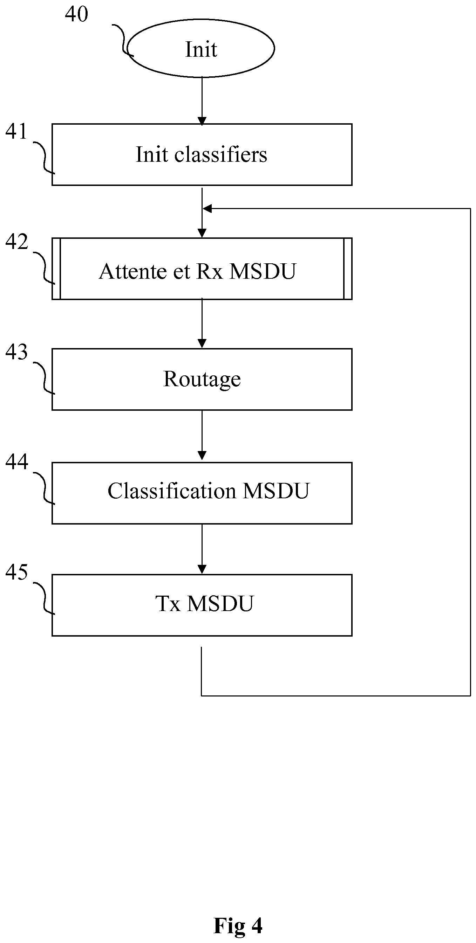

La **figure 4** présente un procédé mis en oeuvre dans la station de base 2 selon une mise en oeuvre particulière de l'invention.

Ce procédé commence par une phase d'initialisation 40 au cours de laquelle les différents paramètres de la station 2 sont mis à jour.

Ensuite, au cours d'une étape 41, la station de base 2 initialise les fonctions de classification 233 et 234 associées à chacune des stations distantes lors de l'établissement des connexions avec les stations distantes. La station de base initialise également une table de routage 235 pointant sur la fonction de classification correspondante pour chaque noeud destinataire appartenant aux sous-réseaux 12 et 13.

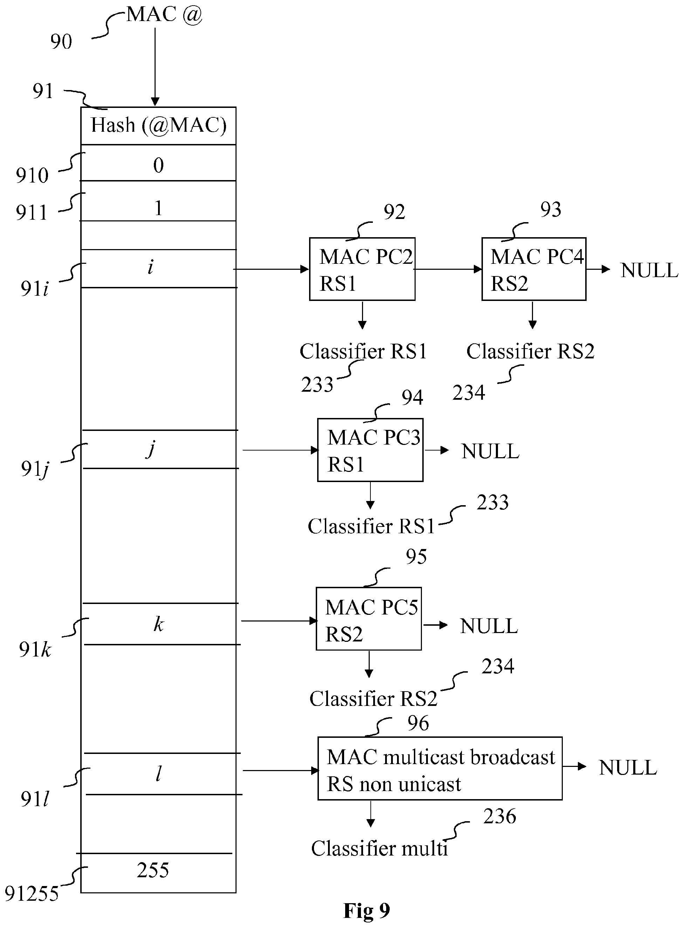

La **figure 9** illustre un exemple de table de routage 235 en fonction d'une adresse MAC 90 présente dans un paquet de données destinées à un noeud d'un des sous-réseaux 12 et 13, et plus précisément une fonction de hachage (ou « hash » en anglais) comprenant N filtres 91x (910 à 91255) (pour N valant 256, N pouvant prendre une valeur quelconque) qui renvoie vers des pointeurs lorsque il y a correspondance entre le filtre et l'adresse MAC 90. Cette fonction de hachage permet de réduire la complexité de l'algorithme de recherche d'adresses MAC destinataire. Chaque entrée du tableau pointe sur une liste chaînée de structure MAC. Chaque structure pointe vers une RS à laquelle le noeud destinataire est connecté. Dans la BS, les adresses de diffusion (« broadcast » en anglais) ou à destinataires multiples (« multicast » en anglais) sont « mappées » (« mapped » en anglais) sur la station distante non à destinataire seul (« non unicast » en anglais) allouée à l'initialisation. Ainsi, lorsqu'un PDU doit être transmis en mode multicast ou broadcast, un classifier spécifique 236 non unicast est utilisé pour les connexions du type multicast ou broadcast. Ainsi, avantageusement, on traite ces cas de manière similaire à une transmission unicast.

Les adresses du type à destinataire unique (ou « unicast » en anglais) sont insérées automatiquement dans la table de hachage lorsqu'elles sont trouvées dans l'adresse source d'un paquet transmis au préalable par le destinataire. Si un noeud se déplace d'un sous-réseau vers un autre sous-réseau, la table est mise à jour.

L'adresse de diffusion est insérée à l'initialisation lorsqu'une connexion de diffusion est créée.

Le but de la fonction de hachage est de transformer une adresse MAC en un indice de tableau; elle retourne par exemple une fonction de « ou exclusif » (xor) de champs de l'adresse MAC modulo 256. Cet indice est utilisé pour identifier un premier pointeur d'une liste chaînée de structure. Une recherche de l'adresse MAC est effectuée jusqu'à ce que la bonne adresse MAC est trouvée. Si cette dernière n'est pas trouvée, le SDU correspondant est écarté.

Des filtres associés à l'adresse ou aux adresses MAC indiquées dans le SDU renvoie vers une ou plusieurs structures d'accès à un classifier, chaînées. Une structure comprend, par exemple, un pointeur vers la structure suivante, un identifiant du noeud destinataire (par exemple la ou les adresses MAC (et/ou, selon une variante, la ou les adresse IP) indiquées dans le SDU, et une fonction de classification associée à un identifiant de la RS (par exemple sous forme d'un pointeur vers une structure associée à une RS (ou adresse broadcast/multicast) qui comprend le classifier correspondant et un compteur d'accès). Avantageusement, la fonction de classification associée à un identifiant de la RS comprend au moins une fonction de test destinée à tester un ou plusieurs paramètres de paquet et attribuer au paquet une connexion. Le compteur d'accès est une variable qui permet de détecter qu'une adresse MAC n'est plus utilisée et donc de la supprimer de la structure d'accès. Les compteurs d'accès sont incrémentés à chaque fois que l'adresse MAC correspondante est identifiée. De manière indépendante, ils sont lus et mis à zéro. Si lors de la lecture, un compteur associé à une adresse unicast est déjà à zéro, alors la structure d'accès est supprimée de la table de hachage (l'adresse MAC n'a pas été utilisée depuis la dernière mise à zéro).

Ainsi, à titre illustratif, le filtre 91*i* (*i* étant compris entre 0 et 255) renvoie vers une première structure d'accès à un classifier 92, associée à l'adresse MAC du noeud PC2 et à la station RS1. Si l'adresse MAC 90 en entrée correspond à l'adresse MAC du noeud PC2, la structure 92 pointe sur le classifier 233 associé à RS1 ; sinon il pointe vers une seconde structure d'accès à un classifier 93 associé à l'adresse MAC du noeud PC4 et à la station RS2. Si l'adresse MAC 90 en entrée correspond à l'adresse MAC du noeud PC4, la structure 93 pointe sur le classifier 234 associé à RS2 ; sinon elle pointe vers un pointeur NULL indiquant que l'adresse MAC 90 en entrée n'est pas celle d'un noeud d'un des sous-réseaux 12 ou 13.

Le filtre 91*j* (*j* étant compris entre 0 et 255) renvoie vers une structure d'accès à un classifier 94 associé à l'adresse MAC du noeud PC3 et à la station RS1. Si l'adresse MAC 90 en entrée correspond à l'adresse MAC du noeud PC3, la structure 94 pointe sur le classifier 233 associé à RS1 ; sinon elle pointe vers un pointeur NULL.

Le filtre 91*k (k* étant compris entre 0 et 255) renvoie vers une structure d'accès à un classifier 95 associée à l'adresse MAC du noeud PC5 et à la station RS2. Si l'adresse MAC 90 en entrée correspond à l'adresse MAC du noeud PC5, la structure 95 pointe sur le classifier 234 associé à RS2 ; sinon elle pointe vers un pointeur NULL.

Le filtre 91*l* (*l* étant compris entre 0 et 255) renvoie vers une structure d'accès à un classifier 96 associée à l'adresse MAC du type multicast ou broadcast et à une station virtuelle correspondante (station spécifique non unicast). Si l'adresse MAC 90 en entrée correspond à une adresse MAC du type multicast ou broadcast, la structure 96 pointe sur le classifier 236 associé à la station virtuelle ; sinon elle pointe vers un pointeur NULL.

Après l'étape 41, au cours d'une étape 42, la station 2 attend puis reçoit au moins un SDU destiné à un noeud appartenant à un des sous-réseaux 12 ou 13 et en provenance d'un sous-réseau 110, 12 ou 13 auquel n'appartient pas le noeud destinataire.

Puis, au cours d'une étape 43, la station 2 effectue le routage en utilisant la table 91 illustrée en figure 9 pour déterminer le classifier associé à la station distante ou le classifier non-unicast 236 pouvant relayer le SDU vers le ou les noeuds destinataires. Cette opération est relativement simple, puisque la station 2 n'a besoin de connaître que le classifier associé.

Après l'étape de routage 43, au cours d'une étape 44, la station 2 effectue la classification du SDU en utilisant le pointeur vers le classifier déterminé à l'étape 43. Cette classification est associée à une RS ou est du type non-unicast, et attribue une connexion unicast entre la station 2 et une RS ou une connexion du type non-unicast au paquet ou aux paquets à transmettre.

Les fonctions de classification 233 (respectivement 234) pointés par les structures 92 et 94 (respectivement 93 et 95) sont avantageusement identiques ce qui permet de simplifier la mise en oeuvre du routage et de la classification. Selon l'état de l'art, il n'y a pas de routage explicite avant une classification et deux fonctions de classification associées à deux connexions différentes sont différentes et peuvent comprendre un test sur le noeud destinataire.

Selon l'art antérieur, il n'y a qu'une seule suite de fonctions de classification strictement ordonnées ; la première à donner un résultat positif déclenche la transmission du MSDU dans la connexion associée à cette fonction de classification. Cela signifie que toutes les fonctions de classification doivent être différentes. Par conséquent, un critère de classification trop général ne permettrait pas la transmission de données via différentes SS. Par exemple, si des trames Ethernet de voix sur IP sont transportées sur un réseau virtuel n°5 et qu'il y a plusieurs équipements connectés derrière plusieurs RS, on devra avoir autant de fonctions de classification que d'équipements à adresser : cela oblige à systématiquement utiliser l'adresse de l'équipement destination comme paramètre supplémentaire à la fonction de classification. Selon l'invention, on simplifie la classification, puisque les fonctions de classification sont associées aux stations distantes pouvant communiquer directement avec la station de base et non aux noeuds des sous-réseaux, placés derrière les stations distantes.

Puis, au cours d'une étape 45, la station 2 transmet le SDU à la station distante 120 ou 130 associée au classifier déterminé à l'étape 43. A titre illustratif, cette étape 45 peut comprendre une préparation d'un ou de plusieurs PDU correspondant à une découpe éventuelle du SDU reçu et/ou à un regroupement de plusieurs SDU reçus, et la transmission du ou des PDU préparés. Ensuite, l'étape 42 est réitérée.

La réception de MSDU par la station de base, pour une transmission vers le réseau 110 se fait d'une manière quelconque et ne sera pas détaillé.

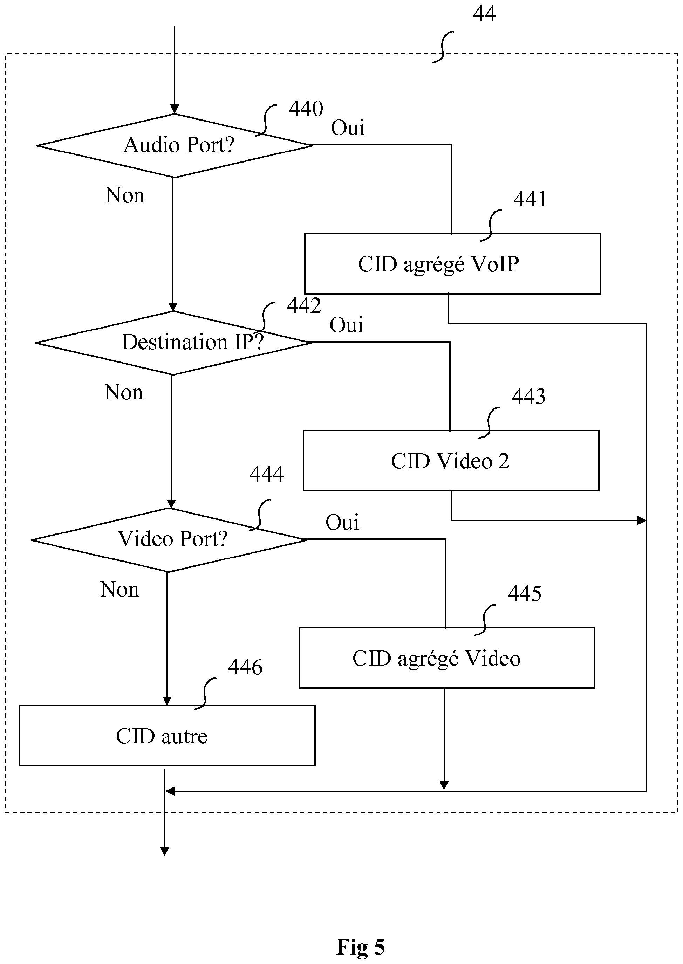

La **figure 5** détaille l'étape 44 de classification selon un exemple mentionné ici à simple titre d'illustration. Durant cette étape, la station 2 exécute la ou les fonctions de test du classifier déterminé au cours de l'étape 43 et associé à la station distante pour identifier la connexion à utiliser.

La classification est un procédé qui permet l'attribution (ou « mapping » en anglais) d'un SDU sur une connexion particulière entre des noeuds. Elle associe un SDU à une connexion et crée une association en fonction des caractéristiques du flux de service. Elle permet de faciliter la délivrance des SDUs avec les contraintes de qualité de services (ou QoS de l'anglais « Quality of Service ») appropriées. Un classifier comprend un ensemble de critères à respecter, appliqués à chaque paquet SDU entrant (par exemple une adresse de destination IP), une référence à un identifiant de connexion (CID) et éventuellement une priorité de classification. Si le paquet correspond aux critères, il est transmis à la couche MAC pour une transmission sur la connexion associée au CID identifié.

On suppose que pour chaque station distante RS 120 ou 130 plusieurs connexions sont ouvertes en fonction d'un ou de plusieurs paramètres quelconques, par exemple :
- un champ quelconque d'une trame IP (notamment un réseau virtuel (ou VLAN de l'anglais « Virtual Local Area Network » signifiant « réseau local virtuel »), un port de communication, une priorité, des adresses MAC et/ou IP, des services différenciés (utilisant un champ DSCP (ou « flag DSCP ») de l'anglais « Differentiated Service Code Point » signifiant « point de code de service différencié »), un type de service (par exemple utilisant un champ TOS (de l'anglais « Type Of Service »)) ;
- une vidéo agrégée qui permet de transmettre des données vidéo à deux noeuds appartenant à un même sous-réseau 12 ou 13 ;
- de la voix sur IP agrégée qui permet de transmettre des données de voix sur IP à deux noeuds appartenant à un même sous-réseau 12 ou 13 ;
- de la vidéo, de l'audio ou de la voix non agrégée.

Dans l'exemple, illustré par la figure 5, on suppose qu'on a des connexions avec leur propre identifiant (CID) pour :
- de la voix sur IP agrégée, les SDU correspondants étant identifiés avec un port audio particulier ;
- de la vidéo non agrégée, les SDU correspondant étant identifiés par des adresses IP de destination particulières ;
- de la vidéo agrégée, les SDU correspondant étant identifiés par un port vidéo particulier ; et
- pour les autres usages.

Ainsi, l'étape 44 débute par un test 440, au cours duquel la station 2 vérifie si le SDU correspond à des ports audio déterminés. Dans l'affirmative, la classification se fait sur la connexion correspondant à de la voix sur IP agrégée au cours d'une étape 441 et l'étape 44 est terminée.

Dans la négative, au cours d'un test 442, la station 2 vérifie si l'adresse de destination du SDU est parmi un ensemble d'une ou de plusieurs adresses IP déterminées. Dans l'affirmative, la classification se fait sur la connexion correspondant à de la vidéo non agrégée au cours d'une étape 443 et l'étape 44 est terminée.

Dans la négative, au cours d'un test 444, la station 2 vérifie si le port de destination du SDU est parmi un ensemble d'un ou de plusieurs ports vidéo déterminés. Dans l'affirmative, la classification se fait sur la connexion correspondant à de la vidéo agrégée au cours d'une étape 445 et l'étape 44 est terminée.

Sinon, la classification se fait sur la connexion correspondant aux autres usages au cours d'une étape 446 qui correspond à une transmission suivant une qualité de service du meilleur effort (en anglais « best effort » qui correspond à une qualité de service non garantie) et l'étape 44 est terminée. Selon une variante de l'étape 446, les paquets entrants sont jetés sans être transmis.

Pour un service agrégé (par exemple vidéo agrégée), la transmission entre la station de base et une RS ne comprend pas l'identification des noeuds destinataires mais comprend une identification du service agrégé. Lorsque la BS reçoit des paquets de données concernant un service agrégé et destinés à des noeuds placés sur un même sous-réseau 12 et 13, ces différents paquets sont transmis dans la même connexion vers la RS correspondante.

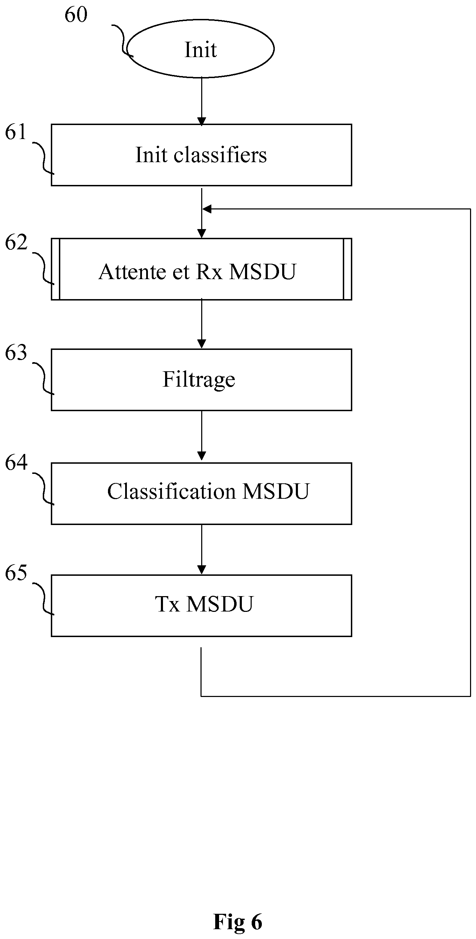

La **figure 6** présente un procédé mis en oeuvre dans la station distante 3 destinée à recevoir des paquets de la station de base 2 et à les transmettre au sous-réseau associé.

Ce procédé commence par une phase d'initialisation 60 au cours de laquelle les différents paramètres de la station 3 sont mis à jour.

Ensuite, au cours d'une étape 61, la station distante 3 initialise les fonctions de classifications 333 associées à la station de base lors de l'établissement des connexions avec la station de base. L'initialisation des fonctions de classifications 333 avec correspondance vers un CID est, par exemple, effectuée selon les requêtes d'un utilisateur.

Puis, au cours d'une étape 62, la station 3 attend puis reçoit au moins un PDU en provenance d'un noeud source, le PDU étant relayé par la station de base vers la station 3.

Puis, au cours d'une étape 63, la station 3 filtre les SDU en laissant passer les SDU destinés au sous-réseau qui lui est associé et en éliminant les éventuels SDU transmis dans un mode de diffusion du type « broadcast » ou « multicast » transmis initialement par un noeud du sous-réseau qui lui est associé.

Ensuite, au cours d'une étape 64 la station 3 effectue une classification du SDU en fonction du paquet à transmettre et, au cours d'une étape 65 le transmet sur le sous-réseau auquel elle est associé vers le ou les noeuds destinataires. L'étape 62 est ensuite réitérée.

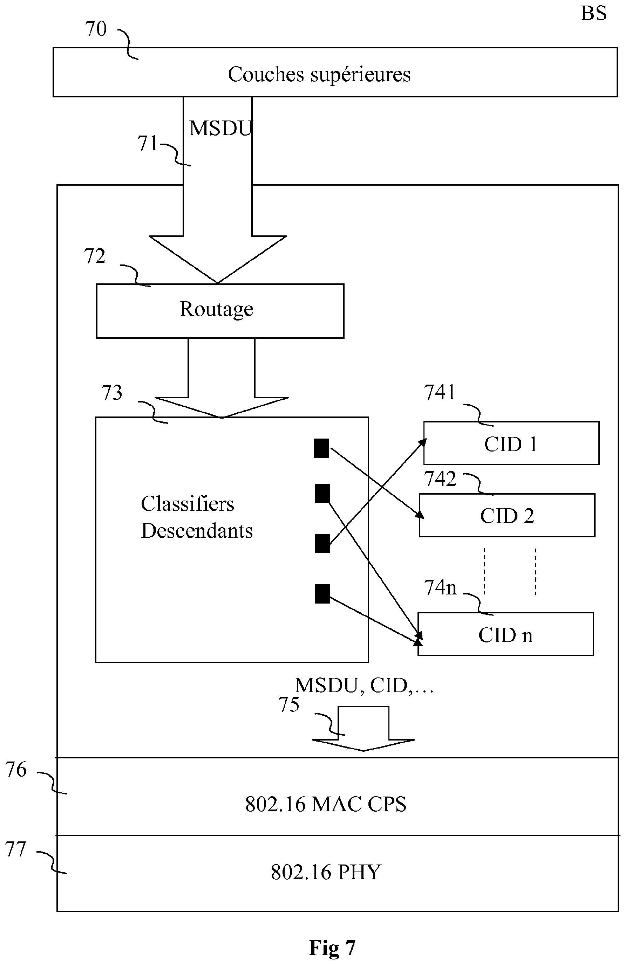

La **figure 7** présente un mécanisme de classification avec une division en couches de protocole de communication mis en oeuvre dans la BS 2.

Un SDU 71 parvenant à la BS et destiné à un noeud d'un sous-réseau 12 ou 13 est transmis par une couche supérieure 70 à une couche routage 72 effectuant l'étape 43.

Puis, dans une sous-couche de convergence, aux fonctions de classifications 73 descendantes qui, chacunes pointent vers une connexion identifiée par son CID 741 à 74n.

Ensuite, les informations 75 nécessaires à la transmission (notamment SDU, CID) sont transmises à la couche MAC 76 puis à la couche physique 75 pour une transmission sur le lien sans fil 130.

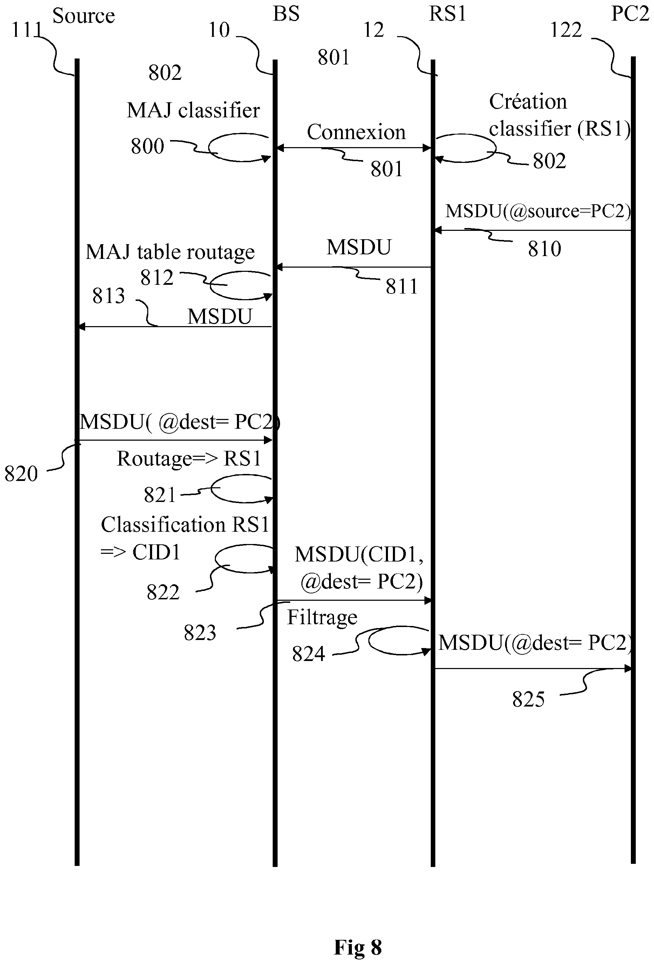

La **figure 8** illustre un exemple de communication entre une source (par exemple le noeud 111), la station de base 10, la station distante 12 et un noeud destination placé derrière la station distante 12 (par exemple le noeud 122) (ces éléments sont représentés par des traits verticaux ; des actions, évènements et/ou transmissions successifs sont illustrés chronologiquement).

Dans une étape préalable à toute transmission vers une station distante, des connexions sont créées. Ainsi, un échange 801 entre la station de base 11 et la station distante RS1 12 permet la création d'une ou de plusieurs connexions dans le sens montant (station distante vers station de base) et d'une ou de plusieurs connexions dans le sens descendant (station de base vers station distante). La création des connexions se fait par exemple suivant un protocole IEEE 802.16. Au cours de cette étape préalable, les classifiers et table de routage coté BS 800 sont créés ou mis à jour et les classifiers coté station distant sont également créés.

Ensuite, le noeud 122 doit être identifié par la station de base. Ainsi, le noeud 122 transmet un SDU 810 destiné à un noeud du sous-réseau 11 ou 13, ce SDU contenant un identifiant du noeud 122 (par exemple son adresse MAC et/ou son adresse IP). Puis, ce SDU est relayé (811) par la station distante 12 vers la station de base 10. La BS 10 met alors à jour (812) sa table de routage en associant le noeud 122 au sous-réseau placé derrière la station distante 12.

Ensuite, la BS peut transmettre les SDU à destination du noeud 122. Ainsi, le noeud source 111 transmet un SDU 820 destiné au noeud 122. La BS identifie (821) grâce à sa table de routage que le noeud correspond à un classifier associé à RS1. Elle fait appel à la fonction de classification correspondante (822) pour identifier la connexion devant transporter le SDU. La BS transmet (823) sur la connexion avec CID identifié le SDU. La station RS1 12 reçoit ce SDU et vérifie (824) qu'il est bien destiné à un noeud de son sous-réseau et que le SDU ne correspond pas à un paquet diffusé dont l'origine est un noeud situé sur son sous-réseau. Cette vérification faite, la station distante 12 transmet (825) le SDU au noeud destinataire 122.

Bien entendu, l'invention ne se limite pas aux modes de réalisation décrits précédemment.

En particulier, l'architecture de la station de base et des stations distantes peut être différente de celles illustrées en figures 2 et 3, dans la fonction respective et/ou la forme des éléments (les fonctions des éléments électroniques peuvent notamment être regroupées dans un nombre restreint de composants ou, au contraire, éclatés dans plusieurs composants) et leur agencement.

L'invention n'est pas limitée à une architecture telle que décrite en regard de la figure 1 mais concerne toute architecture mettant en oeuvre un réseau sans fil à couverture locale (par exemple de quelques dizaines de mètres) ou distante (par exemple de quelques kilomètres selon notamment une norme IEEE 802.16) avec une ou plusieurs RS, chaque RS étant reliée à tout instant à au moins une BS et à un sous-réseau comprenant au moins un noeud. Elle concerne également des architectures de réseaux où la station de base est reliée à des stations clientes par une ou plusieurs liaisons filaires.

L'invention peut également s'appliquer avec des protocoles de communication différents de ceux décrits précédemment. Ainsi, les données applicatives et/ou de contrôle peuvent être transmises selon un protocole quelconque (par exemple avec un accès à contention ou en mode scrutation) sur les liens sans fil. Les canaux de communication entre les RS et les BS peuvent utiliser les mêmes canaux fréquentiels pour les sens montant et descendant (mode dit « half duplex ») ou des canaux fréquentiels différents (mode dit « full duplex »). Le réseau ou les liens reliant la source aux SSs peut également être quelconque et n'est pas limité à un réseau Ethernet. Il s'agit, par exemple, d'un protocole standardisé ou propriétaire, filaire ou sans fil permettant la transmission de données de la source vers chacune des SSs. Le lien entre une BS et tout ou partie des RS peut-être filaire ou sans fil.

Par ailleurs, les paquets (SDU) transmis par une source aux stations clientes sont avantageusement et pas nécessairement découpés en petits paquets (PDU) de niveau MAC. Dans les exemples donnés précédemment les frontières entre SDU et PDU coïncident. Selon des variantes de l'invention, elles ne coïncident pas. Selon d'autres variantes, un PDU peut correspondre à un ou plusieurs SDUs.

Les stations distantes sont avantageusement des stations quelconques compatibles avec la norme IEEE 802.16. Selon des variantes de l'invention, elles comprennent une partie liée aux échanges sans fil compatibles avec la norme IEEE 802.16.

L'architecture de la station de base est également non limitée aux exemples décrits précédemment. En particulier, selon différents modes de réalisation, les stations distantes peuvent comprendre une partie applicative (par exemple, unité de traitement de données (notamment voix et/ou images), unité de contrôle d'une caméra, ...) et les RS peuvent être intégrées dans un équipement comprenant la partie radio et gestion des communications sur le lien sans fil avec la station de base et les noeuds d'un sous-réseau ainsi que d'éventuelles parties applicatives ou de contrôle, ou, au contraire, être séparée en plusieurs équipements.

De même, l'architecture des stations de base est également non limitée aux exemples décrits précédemment.

D'une manière générale, l'invention peut avantageusement être appliquée à des réseaux filaires et/ou sans fil mettant en oeuvre des fonctions de routage et de transport de paquets avec une qualité de service spécifique selon la nature du paquet. Le ou les classifiers identifient la nature du paquet pour lui attribuer une connexion adaptée.

## Revendications

1. Méthode de transmission de paquets de données par une station de base (10), les paquets étant destinés à au moins deux noeuds destinataires (122,123) appartenant à un réseau (121) comprenant une station relais (120), lesdits paquets étant transmis par ladite station de base audit noeud destinataire via ladite station relais, la liaison entre la station de base et la station relais étant une liaison sans fil (130), la méthode comprenant :
- un routage (43) d'un ensemble d'au moins un desdits paquets vers ladite station relais à partir d'une table de routage (235), ladite table de routage comprenant une information représentative d'une association entre les aux moins deux noeuds destinataires et ladite station relais, le routage comprenant une identification d'au moins une fonction de classification associée à ladite station relais ;
- une classification (44) dudit ensemble d'au moins un desdits paquets par exécution de ladite au moins une fonction de classification associée à ladite station relais, la classification attribuant une connexion entre ladite station de base et ladite station relais audit ensemble d'au moins un desdits paquets en fonction de services associés audit ensemble d'au moins un desdits paquets, une même connexion étant associée aux paquets de données associés à un même service, ladite fonction de classification comprenant au moins une fonction de test destinée à tester au moins un paramètre de paquet pour identifier ladite connexion ;
- une étape de transmission (45) dudit ensemble sur la connexion attribuée.

2. Méthode selon la revendication 1, **caractérisée en ce que** le routage met en oeuvre des structures comprenant chacune :
- identifiants des noeuds destinataires;
- un identifiant de la station relais à laquelle les noeuds destinataires sont associés.

3. Méthode selon la revendication 2, **caractérisée** en que les structures comprennent un compteur d'accès.

4. Méthode selon la revendication 1, **caractérisée en ce que** la liaison entre la station de base et la station relais est une liaison du type IEEE 802.16.

5. Appareil de transmission (10) configuré pour une transmission via une liaison sans fil (130) de paquets de données à au moins deux noeuds destinataires (122,123) via une station relais (120), l'appareil comprenant :
- des moyens de routage d'un ensemble d'au moins un desdits paquets vers ladite station relais à partir d'une table de routage (235), ladite table de routage comprenant une information représentative d'une association entre les aux moins deux noeuds destinataires et ladite station relais, le routage comprenant une identification d'au moins une fonction de classification associée à ladite station relais ;
**caractérisé en ce que** l'appareil comprend en outre :
- des moyens de classification dudit ensemble d'au moins un desdits paquets par exécution de ladite au moins une fonction de classification associée à ladite station relais et attribuant une connexion avec ladite station relais audit ensemble d'au moins un desdits paquets en fonction de services associés audit ensemble d'au moins un desdits paquets, une même connexion étant associée aux paquets de données associés à un même service, ladite fonction de classification comprenant au moins une fonction de test destinée à tester au moins un paramètre de paquet pour identifier ladite connexion ;
- des moyens de transmission (25) dudit ensemble sur la connexion attribuée.

6. Appareil selon la revendication 5, où les moyens de routage comprennent des structures comprenant chacune :
- identifiants des noeuds destinataires;
- un identifiant de la station relais à laquelle les noeuds destinataires sont associés.

7. Appareil selon la revendication 6, où les structures comprennent un compteur d'accès.

8. Appareil selon l'une des revendications 5 à 7, où la liaison sans fil est du type IEEE 802.16.

## Patentansprüche

1. Verfahren zur Übertragung von Datenpaketen durch eine Basisstation (10), wobei die Pakete für mindestens zwei Empfängerknoten (122, 123) bestimmt sind, die zu einem Netzwerk (121) gehören, das eine Relaisstation (120) umfasst, wobei die besagten Pakete durch die besagte Basisstation an den besagten Empfängerknoten über die besagte Relaisstation übertragen werden, die Verbindung zwischen der Basisstation und der Relaisstation eine drahtlose Verbindung (130) ist, wobei das Verfahren umfasst:
- ein Routing (43) eines Satzes von mindestens einem der besagten Pakete an die besagte Relaisstation von einer Routingtabelle (235) aus, wobei die besagte Routingtabelle eine Information umfasst, die für eine Zuordnung zwischen den mindestens zwei Empfängerknoten und der besagten Relaisstation repräsentativ ist, wobei das Routing eine Identifizierung von mindestens einer, der besagten Relaisstation zugeordneten Klassifizierungsfunktion umfasst;
- eine Klassifizierung (44) des besagten Satzes von mindestens einem der besagten Pakete durch Ausführung der besagten mindestens einen Klassifizierungsfunktion, die der besagten Relaisstation zugeordnet ist, wobei die Klassifizierung eine Verbindung zwischen der besagten Basisstation und der besagten Relaisstation an den besagten Satz von mindestens einem der besagten Pakete in Abhängigkeit von Servern, die dem Satz von mindestens einem der Pakete zugeordnet sind, zuweist, wobei ein und dieselbe Verbindung den Datenpaketen zugeordnet ist, die ein und demselben Server zugeordnet sind, die besagte Klassifizierungsfunktion mindestens eine Testfunktion umfasst, die dazu bestimmt ist, mindestens einen Paketparameter zu testen, um die besagte Verbindung zu identifizieren;
- einen Schritt zur Übertragung (45) des besagten Satzes über die zugeteilte Verbindung.

2. Verfahren nach Anspruch 1, **dadurch gekennzeichnet, dass** das Routing Strukturen umsetzt, von denen jede umfasst:
- Kennungen der Empfängerknoten;
- eine Kennung der Relaisstation, welcher die Empfängerknoten zugeordnet sind.

3. Verfahren nach Anspruch 2, **dadurch gekennzeichnet, dass** die Strukturen einen Zugriffszähler umfassen.

4. Verfahren nach Anspruch 1, **dadurch gekennzeichnet, dass** die Verbindung zwischen der Basisstation und der Relaisstation eine Verbindung vom Typ IEEE 802.16 ist.

5. Übertragungsgerät (10), das für eine Übertragung über eine drahtlose Verbindung (130) von Datenpaketen an mindestens zwei Empfängerknoten (122, 123) über eine Relaisstation (120) konfiguriert ist, wobei das Gerät umfasst:
- Mittel zum Routing eines Satzes von mindestens einem der besagten Pakete an die besagte Relaisstation von einer Routingtabelle (235) aus, wobei die besagte Routingtabelle eine Information umfasst, die für eine Zuordnung zwischen den mindestens zwei Empfängerknoten und der besagten Relaisstation repräsentativ ist, wobei das Routing eine Identifizierung von mindestens einer, der besagten Relaisstation zugeordneten Klassifizierungsfunktion umfasst,
**dadurch gekennzeichnet, dass** dieses Gerät des Weiteren umfasst:
- Mittel zur Klassifizierung des besagten Satzes von mindestens einem der besagten Pakete durch Ausführung der besagten mindestens einen Klassifizierungsfunktion, die der besagten Relaisstation zugeordnet ist, und Zuteilen einer Verbindung mit der besagten Relaisstation an den besagten Satz von mindestens einem der besagten Pakete in Abhängigkeit von Servern, die dem besagten Satz von mindestens einem der besagten Pakete zugeordnet sind, wobei ein und dieselbe Verbindung den Datenpaketen zugeordnet ist, die ein und demselben Server zugeordnet sind, die besagte Klassifizierungsfunktion mindestens eine Testfunktion umfasst, die dazu bestimmt ist, mindestens einen Paketparameter zu testen, um die besagte Verbindung zu identifizieren;
- Mittel zur Übertragung (25) des besagten Satzes über die zugeteilte Verbindung.

6. Gerät nach Anspruch 5, bei dem die Mittel zum Routing Strukturen umfassen, von denen jede umfasst:
- Kennungen der Empfängerknoten;
- eine Kennung der Relaisstation, welcher die Empfängerknoten zugeordnet sind.

7. Gerät nach Anspruch 6, bei dem die Strukturen einen Zugriffszähler umfassen.

8. Gerät nach einem der Ansprüche 5 bis 7, bei dem die drahtlose Verbindung vom Typ IEEE 802.16 ist.

## Claims

1. Method for transmitting data packets by a base station (10), the packets being intended for at least two destination nodes (122, 123) belonging to a network (121) comprising a relay station (120), said packets being transmitted by said base station to said destination node via said relay station, the link between the base station and the relay station being a wireless connection (130), the method comprising:
- a routing (43) of a set of at least one of said packets to said relay station from a routing table (235), said routing table comprising an information representative of an association between the at least two destination nodes and said relay station, the routing comprising an identification of at least one classification function associated with said relay station,
- a classification (44) of said set of at least one of said packets by execution of said at least one classification function associated with said relay station, the classification assigning a connection between said base station and said relay station to said set of at least one of said packets according to services associated with said set of at least one of said packets, a same connection being associated with the data packets associated with a same service, said classification function comprising at least one test function intended to test at least one packet parameter to identify said connection,
- a transmission step (45) of said set on the assigned connection.

2. Method according to claim 1, **characterised in that** the routing implements structures each comprising:
- identifiers of the destination nodes,
- an identifier of the relay station with which the destination nodes are associated.

3. Method according to claim 2, **characterised in that** the structures comprise an access counter.

4. Method according to claim 1, **characterised in that** the link between the base station and the relay station is a link of the IEEE 802.16 type.

5. Transmission device (10) configured for a transmission via a wireless link (130) of data packets to at least two destination nodes (122, 123) via a relay station (120), the device comprising:
- means for routing a set of at least one of said packets to said relay station from a routing table (235). Said routing table comprising an information representative of an association between the at least two destination nodes and said relay station, the routing comprising an identification of at least one classification function associated with said relay station,
**characterised in that** the device also comprises:
- classification means of said set of at least one of said packets by execution of said at least one classification function associated with said relay station and attributing a connection with said relay station to said set of at least one of said packets according to services associated with said set of at least one of said packets, a same connection being associated with the data packets associated with a same service, said classification function comprising at least one test function intended to test at least one packet parameter to identify said connection,
- means for transmitting (25) said set on the assigned connection.

6. Device according to claim 5, where the routing means comprise structures each comprising:
- identifiers of the destination nodes,
- an identifier of the relay station with which the destination nodes are associated.

7. Device according to claim 6, where the structures comprise an access counter.

8. Device according to one of claims 5 to 7, wherein the wireless link is of the IEEE 802.16 type.
